# EUROPEAN PATENT SPECIFICATION

(11) **EP 1 841 651 B1**
(45) Date of publication and mention of the grant of the patent: **22.04.2009**
(21) Application number: 06716594.4
(22) Date of filing: 27.01.2006
(51) Int. Cl.: B65B 25/04, B65G 47/40, B65B 19/34, B07C 3/08

(54) **APPARATUS AND METHOD FOR SORTING AND/OR AUTOMATIC PACKAGING OF VULNERABLE FRUITS**
VORRICHTUNG UND VERFAHREN ZUM SORTIEREN UND/ODER AUTOMATISCHEN VERPACKEN EMPFINDLICHER FRÜCHTE
APPEREIL ET PROCEDE DE TRI ET/OU D'EMBALLAGE AUTOMATIQUE DE FRUITS DELICATS

(30) Priority: 28.01.2005 NL 1028147
(43) Date of publication of application: 10.10.2007
(73) Proprietor: De Greef's Wagen-, Carrosserie- en Machinebouw B.V., 4196 JB Tricht (NL)
(72) Inventor: DE GREEF, Jacob, Hendrik, NL-4181 BM Waardenburg (NL)
(74) Representative: Land, Addick Adrianus Gosling
(86) International application number: PCT/NL2006/000050
(87) International publication number: WO 2006/080848

(56) References cited:
- EP-A- 0 532 028
- EP-A- 1 270 422
- GB-A- 1 098 506
- NL-C2- 1 001 697
- US-A- 2 435 498
- US-A- 2 961 095
- US-A- 4 501 350
- PATENT ABSTRACTS OF JAPAN vol. 017, no. 510 (M-1480), 14 September 1993 (1993-09-14) -& JP 05 132023 A (YANMAR AGRICULT EQUIP CO LTD; others: 02), 28 May 1993 (1993-05-28)
- PATENT ABSTRACTS OF JAPAN vol. 1997, no. 07, 31 July 1997 (1997-07-31) -& JP 09 071319 A (MITSUBISHI HEAVY IND LTD), 18 March 1997 (1997-03-18)

## Description

The present invention relates to an apparatus and method for sorting and/or automatically packaging vulnerable products such as cucumbers.

Increasingly higher standards of sorting and packaging of these products are required in respect of speed and accuracy. These standards must be met, wherein increasingly higher standards in respect of the quality of these sensitive products must also be met.

In the present prior art sorted products are released onto packing tables where the packing containers are filled manually with these sorted products. Automatic packaging of sorted natural products, such as cucumbers, which complies with the requirements of customers cannot be carried out with the devices available in the present prior art without unacceptable loss of speed, precision and product quality.

The European patent EP-A-1 201 543 describes a device in which cucumbers can be separated and packaged. This known device is however rather complicated and is set up separately of a sorting device, which takes up much needed space. Further more, JP-A-05 132 023 discloses an apparatus for packing cucumbers in trays having the features of the preamble of appended claim 1.

The present invention has for its object to provide a simplified apparatus and method, wherein packing from the sorting device requires little equipment and/or manpower.

The present invention provides an apparatus for sorting and/or automatically packing elongate delicate products such as cucumbers or other vegetables and/or fruit, as defined in claim 1.

Although it is conceivable for the products to be singulated and aligned in a feed conveyor, it is recommended that the alignment takes place in the transport means. The feed conveyor or singulating means is preferably provided with ropes between which protrude fingers of the transport means of the apparatus according to the present invention, so that the transfer of the products can take place as carefully as possible.

Further preferred embodiments of the apparatus can be easily repaired or converted:
- the location of the release positions can be easily changed by displacing the releasing means. A plurality of releasing means can be applied per packing container on one track; and
- the transport container is preferably provided with fingers which are constructed from plastic parts which cost relatively little and of which an integral plastic hinge forms part. The form of the fingers and the numbers can be readily adapted to the form of the product.

In the apparatus according to the present invention release takes place in compartmentalized manner, i.e. a frame or framework with edges or separating plates forming compartments is placed in or above the desired position of the packing container of standard manufacture.

In a preferred embodiment wherein the aligning means form part of the apparatus according to the present invention, these preferably comprise a number of drivable rollers which engage on the products between the fingers of the transport container. The present invention also comprises a method as defined in claim 15.

The transport means are preferably embodied such that the releasing means can be placed at any desired location on the frame of the apparatus. A flexible apparatus is herein obtained, wherein a plurality of separate releasing means can also be placed.

The apparatus is provided with a sorting frame which is arranged above the desired position of the packing container, wherein the sorting frame guides the released products to the correct location in the packing container. The packing containers are fed and discharged by means of a number of conveyor belts to the desired release position of the products. The transport containers with the products consisting of one or more fingers can be tilted downward, as seen from the direction of transport, so that the products can be released into the packing container.

For the purpose of correct release of the products, the apparatus is provided with aligning means for aligning the products in transverse direction perpendicularly of the direction of transport. These aligning means preferably comprise a number of drivable rollers which engage on the products between the fingers of the transport means. Other conceivable (and considered) embodiments may have movable side plates for centered alignment of the products.

For the purpose of releasing the products at the correct location, rockers are preferably also provided which activate the releasing mechanism, whereby the transport containers tilt downward and the products are carried via the sorting frame to the desired position in the packing container. Provided in this releasing mechanism is a hinge consisting of a single component, whereby the danger of malfunction of the apparatus can be considerably reduced and whereby assembly costs are reduced.

The apparatus according to the present invention can be provided with a sorting system consisting of a load cell and/or a camera system for determining external characteristics such as shape, colour and size. Characteristics derived using these data can optionally be used in the sorting.

The products and the packing containers are supplied with conveyor belts specially provided for this purpose.

In the width direction the apparatus can consist of a number of tracks in order to thereby increase the capacity of the apparatus.

Further advantages, features and details of the present invention will be elucidated on the basis of the following description with reference to the accompanying drawings, in which:
Figure 1 shows a schematic side view of a preferred embodiment of the apparatus according to the present invention;
Figure 2 shows a detailed and schematic side view of the apparatus according to figure 1;
Figure 3 is a detailed view in perspective of detail III of figure 2;
Figure 4 is a perspective view of detail IV of figure 2;
Figure 5 is a top view of detail V of figure 4;
Figure 6 shows another view in perspective of detail VI of figure 4;
Figure 7 is a perspective view of the hinge of figure 4;
Figure 8 is a side view in perspective of the hinge of figure 7; and
Figure 9 is a front view of the sorting frame;
Figure 10 is a schematic view of a second preferred embodiment of a sorting frame according to the present invention.

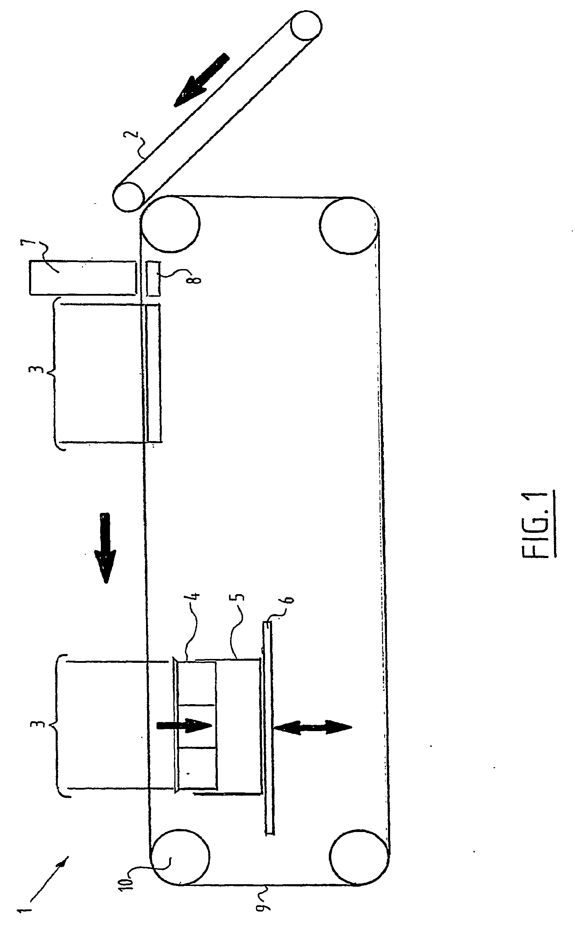

An apparatus 1 (Figure 1) comprises a feed belt 2 with which the singulated cucumbers are supplied, one or more release locations 3 for the sorted cucumbers where the cucumbers are released by placing sorting frame 4 at the correct position in the plastic crate 5 placed on a lift or conveyor belt 6. The different release locations can be used alternately as well as simultaneously. Apparatus 1 is provided with a camera system 7 and/or a weighing system 8 with a load cell to enable sorting of the cucumbers on the basis of weight, colour, shape, size and characteristics derived therefrom. Apparatus 1 is provided with a release location for cucumbers which do not comply with the selection requirements such as straightness, colour etc. Transport of the cucumbers takes place by means of a driven conveyor chain 9 which rotates round a number of transport wheels or transport rollers 10.

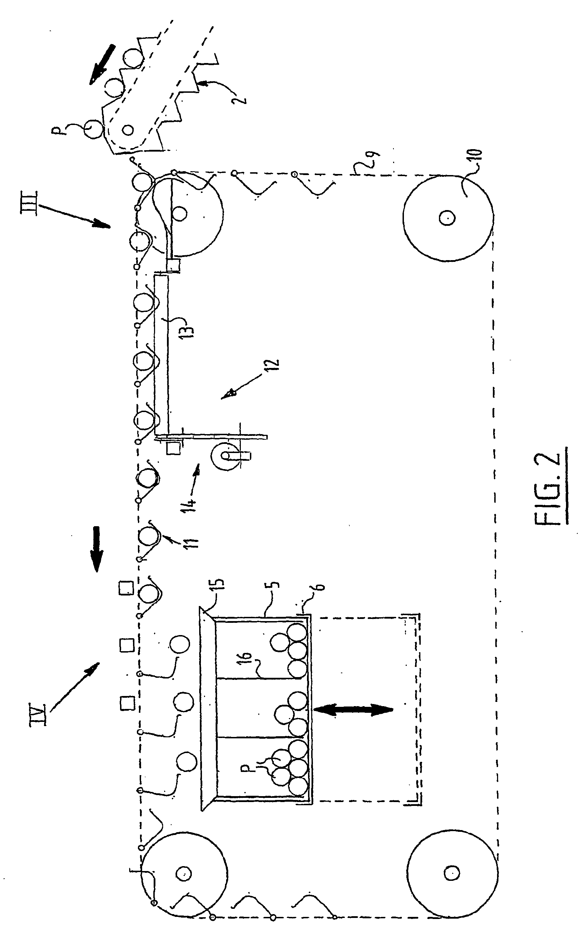

Figure 2 shows the elongate cups 11 in which the cucumbers are situated. The cups have a form which is adapted to the transport of cucumbers. In addition, the device for aligning cucumbers 12 is shown, consisting of a number of aligning rollers 13 and a drive 14. In order to place the plastic crate 5 in the correct position relative to sorting frame 4, this sorting frame 4 is provided with a positioning edge 15. This edge guides the crate with the required accuracy to the desired position. The empty plastic crates 5 can, if desired, be supplied by means of conveyor belts, and the filled crates can be discharged and transported further by means of other conveyor belts. The supplied empty crate is placed on a platform directly below the sorting frame. For filling purposes these are moved toward each other, for instance with a lift, wherein positioning edge 15 guides the plastic crate. Sorting frame 4 consists of a framework 16 of metal or plastic, whereby a number of compartments are realized in the sorting frame in accordance with the desired positioning in the plastic crate.

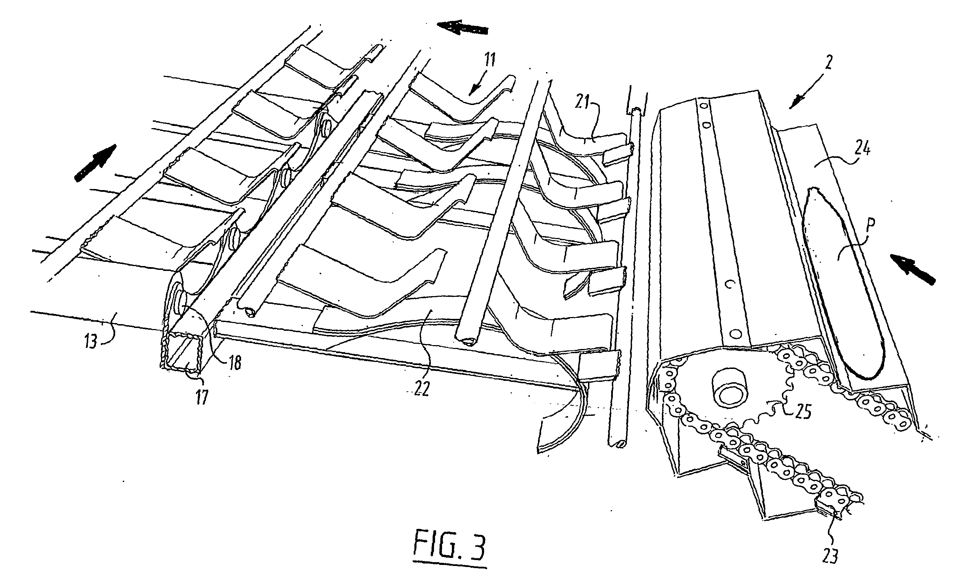

Figure 3 shows the transported cucumbers which are situated in elongate cups 11 consisting of two or more plastic fingers 21. The cucumbers are supplied by means of a feed belt 2 and are transferred from this feed belt into elongate cups 11. Situated at the position where the products on feed belt 2 are placed in elongate cups 11 are a number of positioning belts 22 which hold the cucumbers at the correct height in the cups, whereby the cucumbers are placed in a correct manner onto the rollers of aligning device 12 and are aligned in the transverse direction of the cucumber, perpendicularly of the direction of transport, by aligning means 12. The aligning rollers are placed rotatably in a suspension 18 which is connected fixedly to a support frame 17 manufactured from a tubular profile. Feed belt 2 consists of a driven chain 23 which rotates about a toothed wheel 25 and which co-displaces a flexible belt 24, which is brought by the feed belt into a form such that the singulated cucumber is carried along in stable manner. The number of tracks in the width direction of the device can be increased in order to achieve a greater capacity of the device.

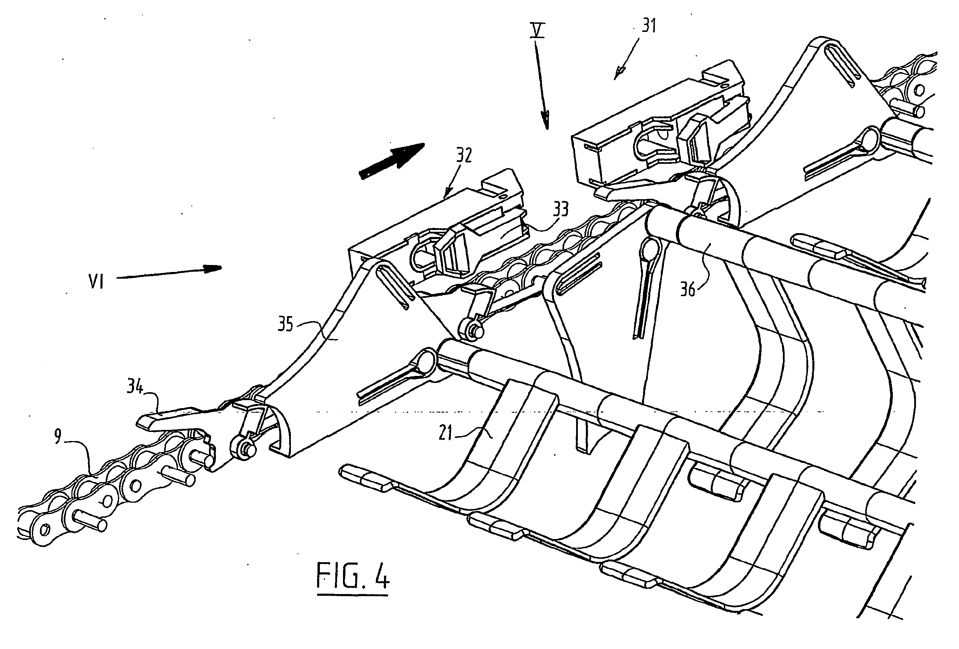

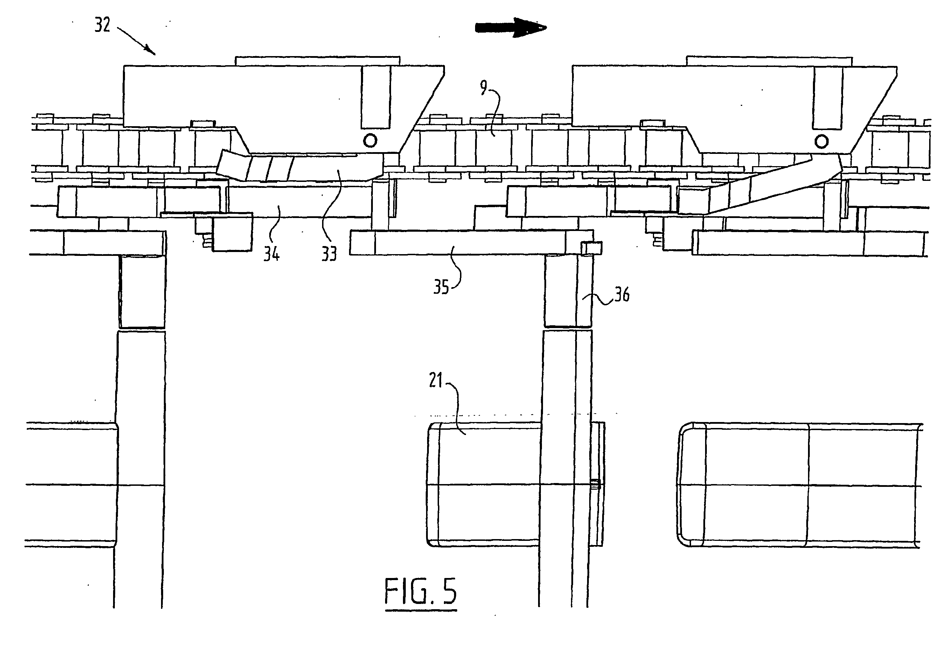

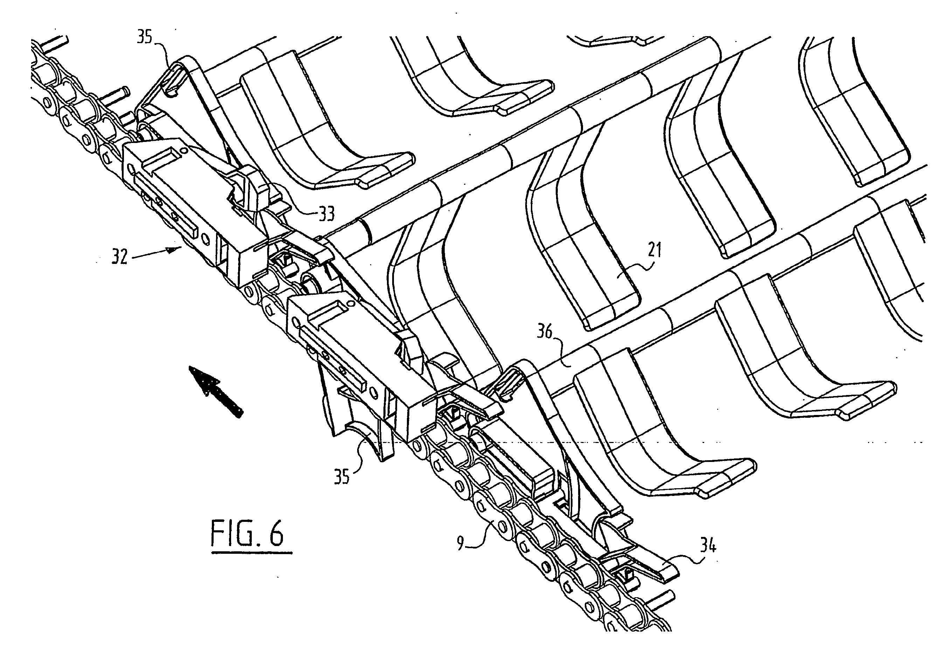

Releasing mechanism 31 (Figures 4, 5 and 6) consists of a rocker 32, a ratchet 33 of which is activated by a control system such that the cucumber is released at the correct moment. This ratchet 33 activates a switch 34 which causes the plastic hinge 35, consisting of one component, to tilt downward as a result of the force of gravity. Due to downward tilting of hinge 35 the elongate cup 11 with the cucumber therein also tilts so that the cucumber is positioned in plastic crate 5 via sorting frame 4. Elongate cup 11 is connected with a shaft 36 to hinge 35 and switch 34, and thereby connected to a driven conveyor chain 9 or similar means, whereby transport of these cups 11 with the cucumbers takes place.

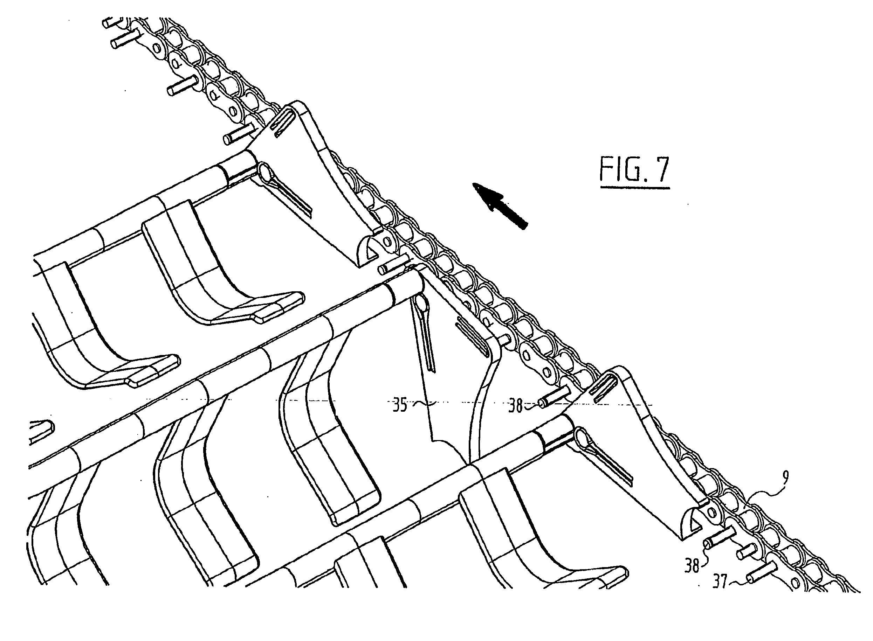

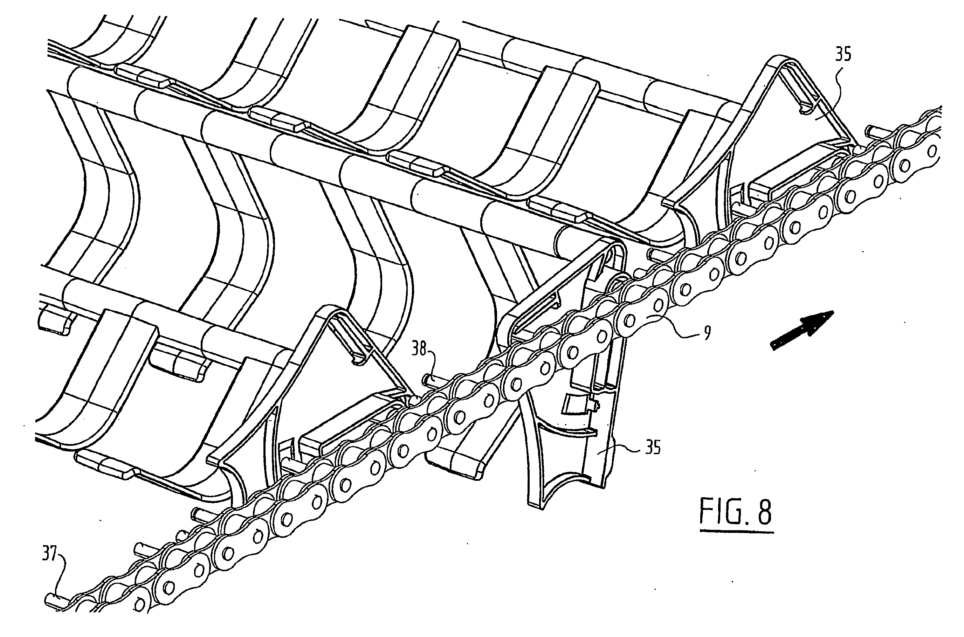

Figures 7 and 8 show the relative positions of fingers 21 on shaft 36 which are connected by means of hinge 35 and switch 34 to conveyor chain 9. The connection of hinge 35 to chain 9 is realized using small pins 37 which are fixed to the chain. Pins with screw thread 38 are provided for connection of switch 34 to chain 9.

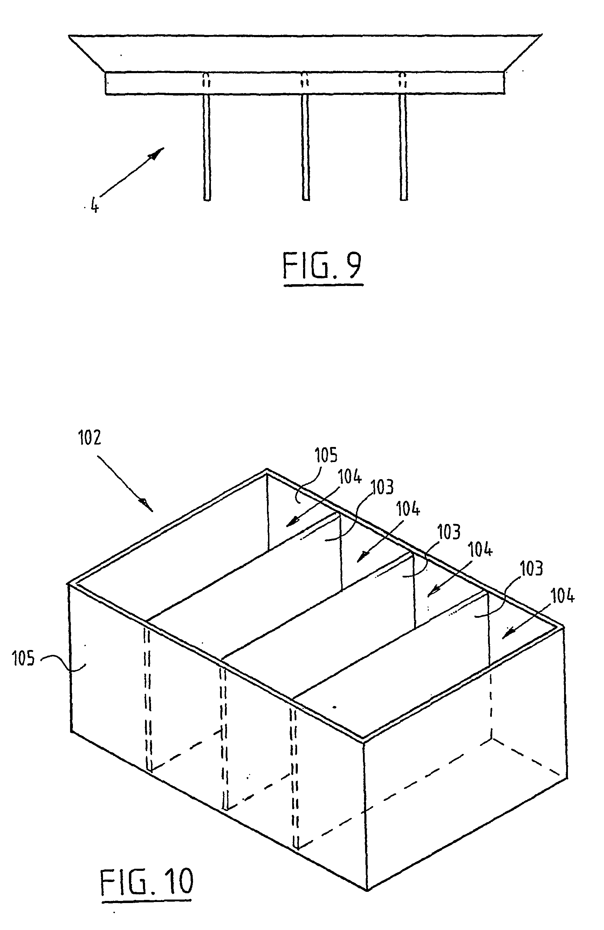

Figure 9 shows sorting frame 4 according to the present embodiment. According to a second preferred embodiment of the method according to the present invention, the cucumbers are released from an apparatus 1 into a crate 102 provided with partitions 103 extending between longitudinal walls 105 of the crate in order to form compartments 104 of the correct dimensions, as shown in Figure 10, in which the cucumbers are then packed in a position which is as straight as possible. In another preferred embodiment with one or more release locations, the packing container with compartments or a packing container with a framework of partitions slides back and forth in the release location.

The present invention is not limited to the above described preferred embodiments thereof; the rights sought are defined by the following claims, within the scope of which many modifications can be envisaged.

## Claims

1. Apparatus (1) for sorting and/or automatically packing elongate delicate products such as cucumbers or other vegetables and/or fruit, comprising:
- transport means comprising transport containers (11) for individualized transport of the products; and
- releasing means (31) for releasing the products in oriented and/or aligned manner from the transport means into a packing container (5), **characterized in that**
a sorting frame or sorting framework (4) having a number of compartments is placed in or above the desired position of the packing container in order to distribute the products via the compartments.

2. Apparatus as claimed in claim 1, wherein the products in manually or automatically aligned and singulated position are transferred manually or automatically to the transport containers.

3. Apparatus as claimed in claim 1 or 2, wherein the transport means are embodied such that the releasing means can be placed at any desired position on a frame of the apparatus.

4. Apparatus as claimed in claim 1, 2 or 3, wherein a compartment (104) of the packing container, or the packing container itself, has a dimension such that the elongate delicate products remain sufficiently aligned and oriented to allow automatic packing of the products.

5. Apparatus as claimed in one or more of the claims 1-4, wherein the frame or framework is provided with a positioning edge (15).

6. Apparatus as claimed in one or more of the claims 1-5, provided with one or more conveyors for feeding and/or discharging, manually or automatically, the packing containers to and/or from the desired release position of the products.

7. Apparatus as claimed in one or more of the claims 1-6, wherein the transport containers can be tilted downward and wherein the elongate products are released in each case directly into the desired compartment of the packing container.

8. Apparatus as claimed in one or more of the foregoing claims, wherein the transport container comprises one or more fingers (21).

9. Apparatus as claimed in one or more of the foregoing claims, provided with aligning means (12) for aligning the products in transverse direction perpendicularly of the direction of transport.

10. Apparatus as claimed in claim 9, wherein the aligning means comprise a number of drivable rollers which engage on the products between the fingers of the transport containers.

11. Apparatus as claimed in any of the claims 7-10, wherein one or more rockers (32) are activated per track and/or physical release position by means of an electrical control signal, and by means of a ratchet (33) cause a switch (34) to tilt whereby the hinge (35) of the transport containers is released and the transport container tilts downward.

12. Apparatus as claimed in any of the claims 1-11, comprising a transport container, the transport container comprising a support part for placing a delicate product and a hinge part which is connected to the support part and which, when operated, causes the support part to tilt downward in order to release the objects, herein the hinge part consists of one (plastic) component.

13. Apparatus as claimed in claim 12, wherein the support part comprises a number of finger parts, wherein the form of the finger is adapted to the form of the product, and wherein the finger part also comprises a bushing part which is partially rotatable about a shaft (36).

14. Apparatus as claimed in claim 12 or 13, wherein the transport container is fixed to a conveyor chain (9) by means of a hinge.

15. Method for sorting and/or automatically packing elongate delicate products such as cucumbers and/or other vegetables and/or fruit, comprising the following steps of;
- singulating the products;
- aligning and/or orienting the singulated products; and
- releasing the products in singulated and/or aligned position thereof into a packing container (5) or a compartment (104) thereof with dimensions such that the products remain oriented and/or aligned during and after release of the products from the transport means, **characterised in that** a sorting frame or sorting framework (4) having a number of compartments is placed in or above the desired position of the packing container in order to distribute the products via the compartments.

16. Method as claimed in claim 15, wherein the apparatus according to one or more of the foregoing claims is applied.

## Patentansprüche

1. Vorrichtung (1) zum Sortieren und/oder automatischen Verpacken länglicher empfindlicher Produkte, wie Gurken oder andere Gemüsesorten und/oder Früchte, die aufweist:
- Transportmittel, die Transportbehälter (11) zum individualisierten Transport der Produkte aufweisen; und
- Freigabemittel (31) zur Freigabe der Produkte in orientierter und/oder ausgerichteter Form, von den Transportmitteln in einen Verpackungsbehälter (5), **dadurch gekennzeichnet, dass**
ein Sortierrahmen oder Sortiergestell (4), mit einer Anzahl an Fächern, in oder über der gewünschten Position des Verpackungsbehälters platziert wird, um die Produkte mittels der Fächer zu verteilen.

2. Vorrichtung, wie in Anspruch 1 beansprucht, wobei die Produkte in ihrer manuell oder automatisch ausgerichteten und vereinzelten Position manuell oder automatisch zu den Transportbehältern weitergeleitet werden.

3. Vorrichtung, wie in Anspruch 1 oder 2 beansprucht, wobei die Transportmittel derart ausgebildet sind, dass die Freigabemittel an jeder gewünschten Position auf einem Rahmen der Vorrichtung platziert werden können.

4. Vorrichtung, wie in Anspruch 1, 2 oder 3 beansprucht, wobei ein Fach (104) des Verpackungsbehälters, oder der Verpackungsbehälter selbst, eine derartige Abmessung hat, dass die länglichen empfindlichen Produkte ausreichend ausgerichtet und orientiert bleiben, um ein automatisches Verpacken der Produkte zu ermöglichen.

5. Vorrichtung, wie in einem oder mehreren der Ansprüche 1-4 beansprucht, wobei der Rahmen oder das Gestell mit einer Positionierungskante (15) versehen ist.

6. Vorrichtung, wie in einem oder mehreren der Ansprüche 1-5 beansprucht, die mit einer oder mehreren Fördereinrichtungen zum manuellen oder automatischen Zuführen und/oder Abtransportieren des Verpackungsbehälters zu und/oder von der gewünschten Freigabeposition der Produkte versehen ist.

7. Vorrichtung, wie in einem oder mehreren der Ansprüche 1-6 beansprucht, wobei die Transportbehälter abwärts gekippt werden können, und wobei die länglichen Produkte in jedem Fall direkt in ein gewünschtes Fach des Verpackungsbehälters freigegeben werden.

8. Vorrichtung, wie in einem oder mehreren der vorangegangen Ansprüche beansprucht, wobei der Transportbehälter einen oder mehrere Finger (21) aufweist.

9. Vorrichtung, wie in einem oder mehreren der vorangegangenen Ansprüche beansprucht, die mit Ausrichtungsmitteln (12), zum Ausrichten der Produkte in transversaler Richtung, senkrecht zu der Transportrichtung, versehen ist.

10. Vorrichtung, wie in Anspruch 9 beansprucht, wobei die Ausrichtungsmittel eine Anzahl antreibbarer Rollen aufweisen, die zwischen den Fingern des Transportbehälters an den Produkten angreifen.

11. Vorrichtung, wie in einem der Ansprüche 7-10 beansprucht, wobei ein oder mehrere Kniehebel (32) pro Bahn und/oder physikalischer Freigabeposition mittels eines elektrischen Steuersignals aktiviert werden, und mittels eines Klinkenschaltwerks (33) einen Schalter (34) zum Kippen bringen, wodurch die Kippvorrichtung (35) des Transportbehälters freigegeben wird und der Transportbehälter abwärts kippt.

12. Vorrichtung, wie in einem der Ansprüche 1-11 beansprucht, die einen Transportbehälter aufweist, wobei der Transportbehälter einen Stützteil, zum Platzieren eines empfindlichen Produkts, und einen Kippvorrichtungsteil aufweist, der mit dem Stützteil verbunden ist, und der bei Betrieb den Stützteil zum Abwärtskippen bringt, um die Objekte freizugeben, wobei der Kippvorrichtungsteil aus einem (Plastik-) Bauteil besteht.

13. Vorrichtung, wie in Anspruch 12 beansprucht, wobei der Stützteil eine Anzahl an Fingerteilen aufweist, wobei die Form des Fingers an die Form des Produkts angepasst ist, und wobei der Fingerteil auch einen Buchsenteil aufweist, der teilweise um einen Schaft (36) rotierbar ist.

14. Vorrichtung, wie in Anspruch 12 oder 13 beansprucht, wobei der Transportbehälter an einer Förderkette (9) mittels einer Kippvorrichtung fixiert ist.

15. Verfahren zum Sortieren und/oder automatischen Verpacken länglicher empfindlicher Produkte, wie Gurken und/oder andere Gemüsesorten und/oder Früchte, das die folgenden Schritte aufweist:
- Vereinzeln der Produkte;
- Ausrichten und/oder Orientieren der vereinzelten Produkte; und
- Freigeben der Produkte in vereinzelter und/oder orientierter Position davon in einen Verpackungsbehälter (5), oder ein Fach (104) davon, mit derartigen Abmessungen, dass die Produkte während und nach der Freigabe der Produkte von den Transportmitteln orientiert und/oder ausgerichtet bleiben, **dadurch gekennzeichnet, dass** ein Sortierrahmen oder Sortiergestell (4), mit einer Anzahl an Fächern, in oder über der gewünschten Position des Verpackungsbehälters platziert ist, um die Produkte mittels der Fächer zu verteilen.

16. Verfahren, wie in Anspruch 15 beansprucht, wobei die Vorrichtung gemäß einem oder mehreren der vorangegangenen Ansprüche verwendet wird.

## Revendications

1. Appareil (1) pour trier et / ou emballer automatiquement des produits longs et délicats tels que des concombres ou d'autres légumes et / ou fruits, comprenant :
des moyens de transport comprenant des conteneurs de transport (11) pour le transport individualisé des produits ; et
des moyens de libération (31) pour libérer les produits d'une manière orientée et / ou alignée depuis les moyens de transport, dans un conteneur d'emballage (5), **caractérisé en ce que** :
un châssis de tri ou un cadre de tri (4) ayant un certain nombre de compartiments, est placé à l'intérieur ou au-dessus de la position souhaitée du conteneur d'emballage afin de distribuer les produits via les compartiments.

2. Appareil selon la revendication 1, dans lequel les produits manuellement ou automatiquement alignés et positionnés individuellement sont transférés manuellement ou automatiquement jusqu'aux conteneurs de transport.

3. Appareil selon la revendication 1 ou 2, dans lequel les moyens de transport sont inclus de sorte que les moyens de libération peuvent être placés dans n'importe quelle position souhaitée sur un châssis de l'appareil.

4. Appareil selon la revendication 1, 2 ou 3, dans lequel un compartiment (104) du conteneur d'emballage, ou le conteneur d'emballage lui-même, a une dimension de sorte que les produits longs et délicats restent suffisamment alignés et orientés pour permettre l'emballage automatique des produits.

5. Appareil selon une ou plusieurs des revendications 1 à 4, dans lequel le châssis ou le cadre est prévu avec un bord de positionnement (15).

6. Appareil selon une ou plusieurs des revendications 1 à 5, prévu avec un ou plusieurs transporteurs pour alimenter et / ou décharger, manuellement ou automatiquement, le conteneur d'emballage vers et / ou de la position de libération souhaitée des produits.

7. Appareil selon une ou plusieurs des revendications 1 à 6, dans lequel les conteneurs de transport peuvent être inclinés vers le bas et dans lequel les produits longs sont libérés, dans chaque cas, directement dans le compartiment souhaité du conteneur d'emballage.

8. Appareil selon une ou plusieurs des revendications précédentes, dans lequel le conteneur de transport comprend un ou plusieurs doigts (21).

9. Appareil selon une ou plusieurs des revendications précédentes, prévu avec des moyens d'alignement (12) pour aligner les produits dans la direction transversale perpendiculairement à la direction de transport.

10. Appareil selon la revendication 9, dans lequel les moyens d'alignement comprennent un certain nombre de rouleaux pouvant être entraînés qui se mettent en prise sur les produits entre les doigts des conteneurs de transport.

11. Appareil selon l'une quelconque des revendications 7 à 10, dans lequel un ou plusieurs culbuteurs (32) sont activés par voie et / ou position de libération physique au moyen d'un signal de commande électrique, et au moyen d'un encliquetage (33), amènent un commutateur (34) à s'incliner moyennant quoi la charnière (35) du conteneur de transport est libérée et le conteneur de transport s'incline vers le bas.

12. Appareil selon l'une quelconque des revendications 1 à 11, comprenant un conteneur de transport, le conteneur de transport comprenant une partie de support pour placer un produit délicat et une partie de charnière qui est raccordée à la partie de support et qui, lorsqu'elle est actionnée, amène la partie de support à s'incliner vers le bas afin de libérer les objets, dans lequel la partie de charnière se compose d'un composant (en plastique).

13. Appareil selon la revendication 12, dans lequel la partie de support comprend un certain nombre de parties de doigt, dans lequel la forme du doigt est adaptée à la forme du produit, et dans lequel la partie de doigt comprend également une partie de douille qui peut partiellement tourner autour d'un arbre (36).

14. Appareil selon la revendication 12 ou 13, dans lequel le conteneur de transport est fixé à une chaîne de transporteur (9) au moyen d'une charnière.

15. Procédé pour trier et / ou emballer automatiquement les produits longs et délicats tels que des concombres et / ou d'autres légumes et / ou fruits, comprenant les étapes suivantes :
individualiser les produits ;
aligner et / ou orienter les produits individualisés ; et
libérer les produits dans leur position individualisée et / ou alignée dans un conteneur d'emballage (5) ou leur compartiment (104) avec des dimensions de sorte que les produits restent orientés et / ou alignés pendant et après la libération des produits depuis les moyens de transport, **caractérisé en ce qu'**un châssis de tri ou un cadre de tri (4) ayant un certain nombre de compartiments, est placé à l'intérieur ou au-dessus de la position souhaitée du conteneur d'emballage afin de distribuer les produits via les compartiments.

16. Procédé selon la revendication 15, dans lequel l'appareil selon une ou plusieurs des revendications précédentes est appliqué.
